Europäisches Patentamt

European Patent Office

Office européen des brevets

(19)

(11) Publication number: **0 005 045**

A1

# EUROPEAN PATENT APPLICATION

(12)

(21) Application number: **79300630.5**

(22) Date of filing: **17.04.79**

(51) Int. Cl.²: **H 04 L 11/16**
**G 06 F 3/04**

(30) Priority: **20.04.78 US 898466**

(43) Date of publication of application:
**31.10.79 Bulletin 79/22**

(84) Designated Contracting States:
**CH DE FR GB NL**

(71) Applicant: **NETWORK SYSTEMS CORPORATION**
**Brooklyn Center Hennepin County**
**Minnesota(US)**

(72) Inventor: **Christensen, Gary S.**
**1050 Tiller Lane**
**St. Paul Minnesota(US)**

(72) Inventor: **Humphrey, Donald J.**
**7760 No. Shore Circle**
**Forest Lake Minnesota(US)**

(72) Inventor: **Milligan, James H.**
**821 Cannon Avenue**
**St. Paul Minnesota(US)**

(72) Inventor: **Thornton, James E.**
**131 Montrose Place**
**St. Paul Minnesota(US)**

(74) Representative: **Daunton, Derek**
**Barlow, Gilett & Percival 94, Market Street**
**Manchester M1 1PJ(GB)**

(54) Data-pulse communication system and adapter.

(57) An adapter for use in an electrical data-pulse communication system, and a system incorporating such an adapter. The adapter has a buffer (17a) for holding data messages, a control unit (17c), and a circuit (16) for placing coded data messages on a selected trunk line (14) and for selectively receiving coded data messages. By providing one such adapter in each of multiple equipments (10, 11) in the communication system linked to transmission lines (14) the equipments (10, 11) are rendered able to communicate directly with one another without the provision of central communication management.

*FIG. 2*

| TRUNK INTERFACE | BUFFER & CONTROL LOGIC | MICRO-PROCESSOR | CPU INTERFACE |

Croydon Printing Company Ltd.

0005045

DP110479                    - 1 -

## DATA-PULSE COMMUNICATION SYSTEM AND ADAPTER

Without reference to any specific configuration or any specific patents, it is known that there are a multitude of communication systems, patented and unpatented, for data communications between and among central processor units (CPUs) and associated peripheral equipments (PEs) such as mass storage devices, printers, terminals and the like. Basically, in these communication systems the data is transmitted either serially or in parallel. Serial transmission has the advantage of less bulk, that is, fewer transmission lines or wires and less circuitry necessary to control, code and decode the data, but suffers from lack of speed of transmission. Parallel transmission provides much higher data rates but requires a multiplicity of lines and circuits therefore creating greater bulk and greater power requirements, etc. In general, prior systems for communication

0005045

between CPUs and multiple PEs have created tremendous management problems to transfer the huge amounts of data between the elements in the system. Often part or all of a general purpose processor had to be utilized merely to manage the transfer of data between and amongst the various other units in the system. But even this has its shortcomings. All of the data has to flow through the managing processor which can create a bottleneck in the flow of massive amounts of data between various units.

The present invention seeks to obtain the best of the two systems of parallel and serial transmission of computer data. The invention utilizes single wire coaxial cable trunk lines with multiple drops, i.e., with various equipments or units connected onto the trunk lines at various locations along the line. This avoids the bulky multiple wire cables which had been used previously for providing parallel communications between various processors and associated peripheral equipment. The coaxial cable trunk lines permit high data rate transfer between units. In the past, if it became necessary to increase the distance between units in communication with one another, the speed of transfer of the data was reduced or parallel paths of transmission had to be provided. In the present invention it is possible to connect a large number of units to each of the coaxial cable trunks lines over quite long distances without substantially affecting or slowing down the data rate transmission. As a feature of the invention, therefore, because there are substantially fewer interconnected wires, the likelihood of error or malfunction occurring in the transmission of the data is reduced.

The features and advantages of the present invention are obtained by providing each of the units in the communication system, whether it be a CPU or PE, with an adapter. The unit is then linked with the adapter and only the adapter is connected into the trunk line. This eliminates the need for a central communication management and permits the CPUs and the PEs to communicate directly between and amongst one another. As yet a further feature of the invention, different makes of CPUs and PEs are linked to one another even though their respective logical and electrical interfaces may be different and they may have different data rates. In this way then, for example, a CDC, and IBM and a Univac central processor and tape and disc and terminal networks of these and other manufacturers can be linked up to one another. Therefore, installations which have units made by different manufacturers can now be linked together for communication with one another so as to get optimum use out of the installation.

One way of carrying out the invention is described in detail below with reference to drawings which illustrate only one specific embodiment, in which:

Fig. 1 is a block-diagram illustration of a typical computer communication system incorporating adapters in accordance with the teachings of the invention;

Fig. 2 illustrates in block diagram form, the essential parts of an adapter of the invention;

Fig. 3 illustrates in block diagram form the manner in which information is sent from a CPU into its associated adapter according to the teachings of the instant invention;

Fig. 4 illustrates in block diagram form in greater detail the construction of the micro-processor section of the adapter;

Fig. 5 illustrates in block diagram form in greater detail the logic circuits utilized in controlling the transfer of information;

Fig. 6 illustrates the manner in which the access code for the transmitted information is generated;

Fig. 7 is a diagram illustrating the need for delay times in transmitting information; and

Fig. 8 is another diagram illustrating the need for delay times.

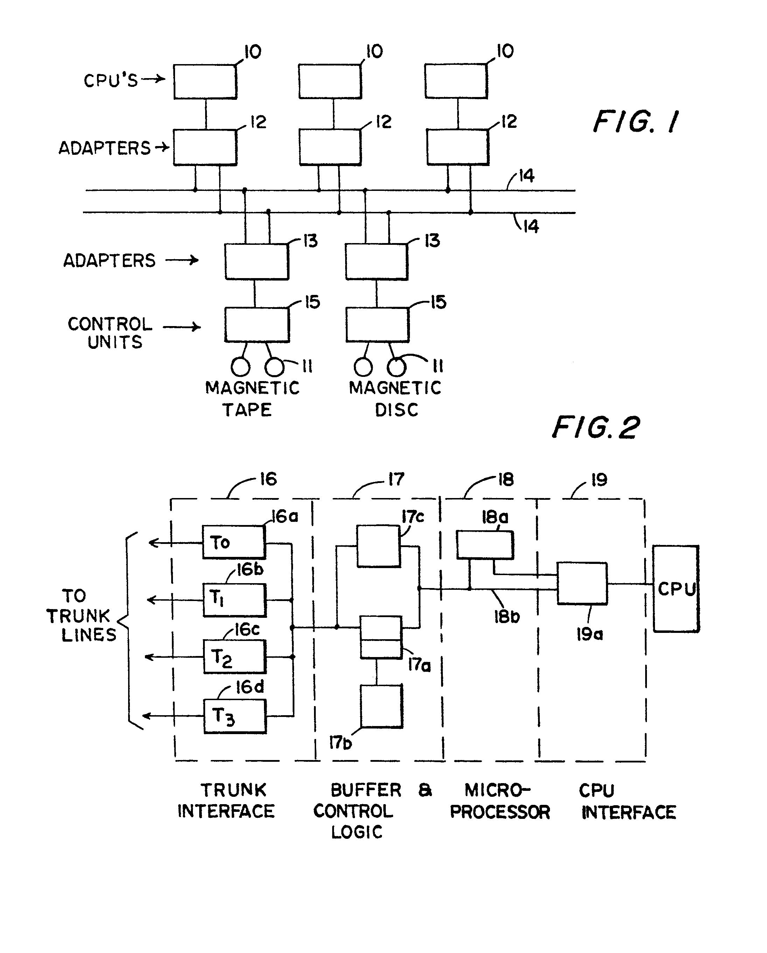

Fig. 1 illustrates the general configuration of a system incorporating the teachings of this invention. In general, a plurality of CPUs 10 and a plurality of PEs 11, which may be, for example, magnetic tape units, magnetic discs or other record-keeping units, are coupled through their respective adapted 12 and 13 to the coaxial cable trunk lines 14. The peripheral equipments have associated control units (CUs) 15 and a single control unit may be used to control the operation of more than one peripheral equipment. In general, the network provides for access to and from the various devices over a number of trunk lines and provides effective access to and from multiple peripheral units from multiple CPUs.

Although not considered a part of the present invention, high speed transmission is accomplished in part by use of 75 ohm coaxial cable and high speed electronic circuitry. In certain applications special coaxial cables or other transmission media can be used. The system uses base-band phase modulation for transmission of the electrical pulse signals. The adapters contain transceiver circuitry for receiving and transmitting the electrical pulse data signals and the transceivers are tapped into the coaxial cable trunk lines utilizing circuitry in the manner and in the fashion as described in U.S. pending patent application Serial No. 768,226 by Gerald R. Olson titled "Circuit for Wire Transmission of High Frequency Data Communication Pulse Signals" which is assigned to the present applicant. As described in greater detail in the aforementioned U.S. patent application, the adapters are AC coupled into each of the data trunk lines. The impedance seen in the coaxial cable at each tap or drop in the line is carefully matched to the line allowing multiple drops while maintaining a high performance and reliability of the date transmission.

The general make up of the adapter is shown in block diagram form in Fig. 2. The adapter can be

0005045

considered to be divided into four major logical sections. Section 16 is designated as the trunk interface. It contains the circuitry to provide the electronics for transmitting and receiving the data signals on the lines and the high speed logic that is necessary to manage the transmitted information. Four circuits 16a-d are illustrated in block form in the drawing, each designating the circuitry for interfacing the adapter to a different trunk line.

Section 17 is designated buffer and control logic. The buffer and control logic, in conjunction with the trunk interface section 16, accomplishes the very high speed control of the trunk transmissions. Besides containing buffers 17a and address register 17b, it also contains the logic and control circuits 17c which are necessary to resolve any problems which might occur whenever there is any contention for the use of the buffers between the trunk interfaces and the equipment interfaces.

Section 18 contains a micro-processor 18a which handles the equipment functions and the responses and also controls or manages the data flow which might take the direct data path 18b between the equipment and the adapter buffers in Section 17. The micro-processor contains an instruction memory.

0005045

The direct data path 18b allows high speed block transfers between the adapter buffers and the attached equipment unlimited by the micro-processor 18a. The circuitry to provide the electrical and logical interface to the specific attached CPU is contained in Section 19 and is illustrated merely in block form designated 19a.

The described computer communication network utilizes a processor adapter which is associated with a CPU and a peripheral adapter which is associated with a PE. The processor adapter will be described in detail since the operation and function of the peripheral adapter can readily be understood and derived therefrom. But for explanation, a processor adapter transmits and receives network messages between the attached processor and the network of data trunks. The messages are generated by the processors and the processor adapted receives the complete message for transmission from the processor and delivers the complete received message to the processor. On the other hand, a peripheral adapter is operated by and generates network messages. It interprets received network messages and accomplishes the specified function internally or with attached devices. It generates messages to communicate the

0005045

result of actions initiated by received messages. The messages will be explained in greater detail hereinafter.

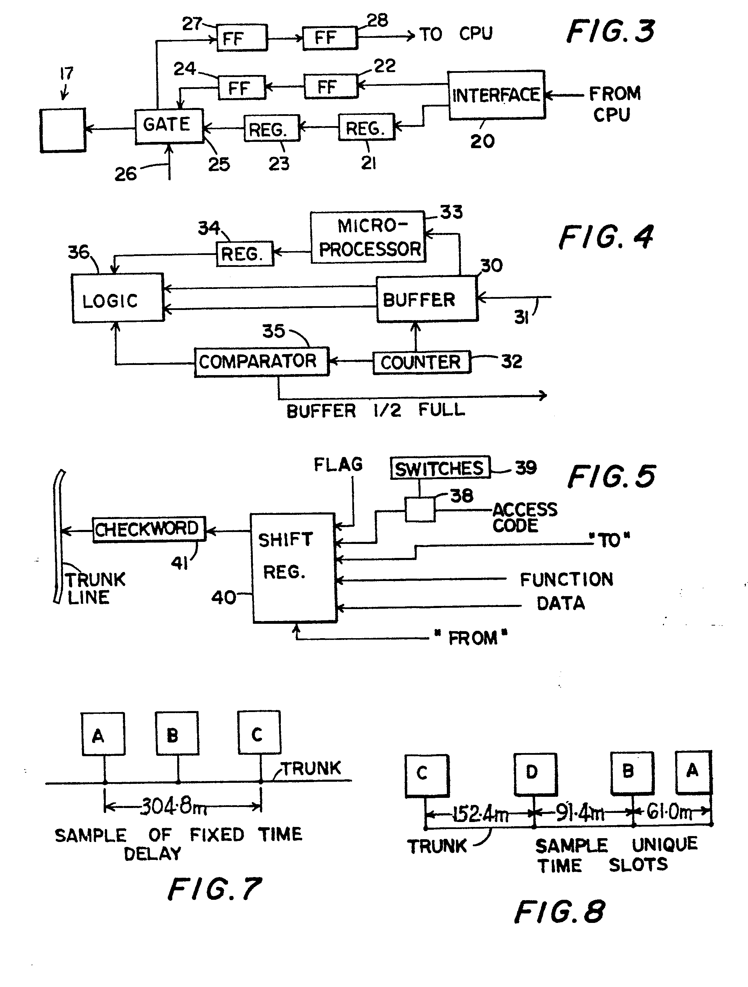

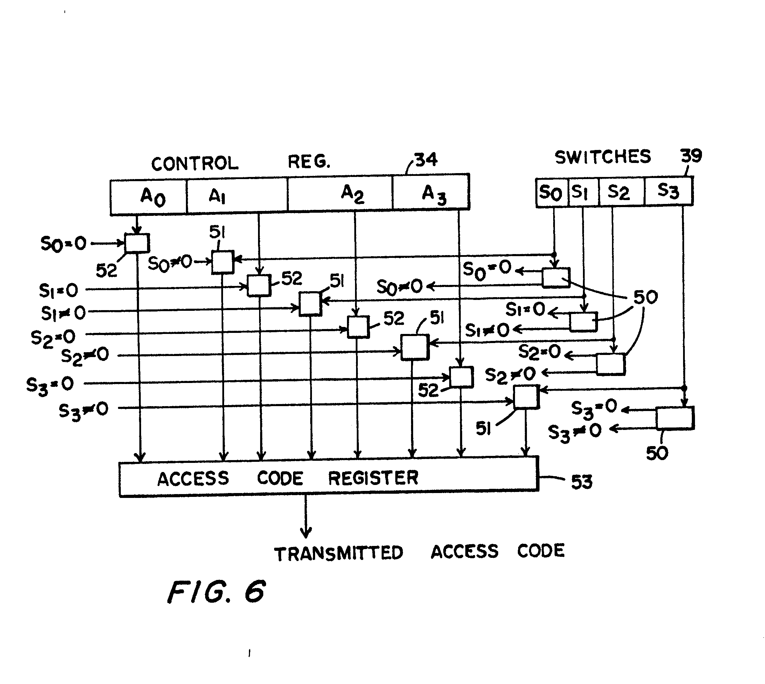

Turning next to Fig. 3, the information from the CPU is first entered into the electrical interface circuitry 20. The format and the content of the information will be described later in greater detail but for the present the information can be considered to be in electrical pulse form containing information to be transmitted from the CPU. (It should be kept in mind that a CPU will also receive information in the same general electrical signal form). The electrical interface circuitry 20 is merely used to adapt the electrical signal levels and values and pulse rates of the respective CPUs to a standard format for use within the adapters. No details of the interface electrical circuitry 20 are thought to be necessary since one of ordinary skill in the artwill be able to design suitable circuitry to effect the transition. From the electrical interface circuitry 20, the information is sent to and at least temporarily held in register 21 and a signal indicating that the information is ready or on the line is fed to a flip-flop 22 to set it to the ready condition. To meet certain electrical and logical design requirements,

0005045

the information is sent from storage register 21 to another temporary storage register 23 and an output from flip-flop 22 is used to set the state of another flip-flop 24. The information is gated out of register 23 to the buffer section 17 through gate 25 under control of a gating signal from flip-flop 24 and another gating input 26 which will be described later in greater detail. At the same time that the information is being gated out of register 23 to the buffer section 17, a signal indication of this information transfer is provided as an output from gate 25 back through flip-flops 27 and 28 to the CPU. To summarize, functionally the CPU first puts the information on the lines and puts a ready signal on the appropriate line. The adapter then uses the ready signal to gate information into the buffer section in the adapter and at the same time the adapter puts a received signal on a line back to the CPU. The CPU then drops the ready signal and the adapter then drops the received signal and the CPU, if it so desires, can then send out more information.

It would be appropriate here to describe the form and format of the information which, in the example used here to describe the operation of the invention, is being delivered as an output from a CPU. The form of the transmitted information is conventional, it is in electrical pulse form between two voltage levels with each designated pulse constituting a binary digit or bit and each bit being either a 0 or 1 depending upon the voltage level of the pulse in the corresponding bit position. A series of bits in sequential order make up the information being transmitted. The pulse rate and the voltage levels are a matter of choice and may differ with different pieces of equipment utilizing the present invention. However, within the internal operation of the communication system, that is internally of the adapters and between adapters, the transmitted and received information has the same electrical characteristics. The information initially delivered by a CPU for transmittal to either another CPU or to a PE is initially in the form of a network message. The network message consists of two sections, the message proper and, optionally, associated data. It is possible and sometimes occurs that a CPU merely sends a message with no associated data. The message proper can be considered to be made up of a group of separate fields. For purposesof explanation but with no limitation thereto being intended, typically the length of the message proper may by up to 512 bits. The length of the associated data is unlimited.

0005045

The first field of the message proper is the control field made up of 16 bits. Four of the bits designate a selected trunk line (where four trunk lines are used) and the remaining 12 bits are set aside for use as needed for various control functions which might arise. The next field of the message proper is the access code which is also 16 bits in length and is used in conjunction with the transmission of all data associated with the particular network message. Each adapter in the system has a 16,bit physical access code assigned to it. This code is set by positioning thumb wheel switches in the adapter. As will be described in greater detail later, an adapter will not accept or respond to communication which contains an access code which does not compare to its own physical access code. The next field of the message proper is the "To" field which is also a 16 bit word which defines the destination of the network message. The first 8 bits are used by a transmitting adapter as designating the physical network address of the receiving adapter with which it is communicating. The remaining 8 bits of the "To" word may be used for certain purposes by specific adapters or are available for use to define internal destinations. The next field in the message proper is the "From" field and is

0005045

also a 16 bit word and is used by a receiving
processor adapted or peripheral adapter as indicating the source of the message that it receives.
Finally, the function field of the message proper
designates or defines to a receiving adapter the
basic function of the message.

To summarize then, in communication between CPUs,
the network message is generated by the transmitting
CPU for the purposes of:  identifying the transmission source and the receiver destination;  instructing
the receiver what data it will receive;  instructing
the receiver how and where it should handle and treat
the data;  and enabling the receiver to then acknowledge
that it understands its instruction.  The need for the
network message arises because the aim is to transmit
and receive large blocks of data at very high rates
(as distinguished from short blocks of data transmission between long intervals) and therefore it is
desirable that the communicating units are fully set
up to handle and treat the data and respond to the
transmitted message.  The network message permits
the communicating processors to initially set up a
communication link between them in a one-shot operation and thereafter transmit large blocks of data at
high speeds.  The adapter of the transmitting CPU

0005045

uses the network message from the transmitting CPU to set up its own format for communication to the adapter for the receiving CPU.

Turning now to Fig. 4, the information gated out of storage register 23 into the buffer section 17 is fed into buffer 30 via input line 31. Buffer 30 in substance is an addressable memory unit. The information is stored in buffer 30 at locations designated by address counter 32 in the conventional fashion. Generally speaking, address counter 32 advances in sequential order through the memory location addresses starting at the low end through the uppermost end and then repeats the cycle and thereby causes the information to be stored sequentially in the buffer storage locations. Part of the information stored in the buffer 30, which is in the message proper form, is looked at or monitored by a control unit 33 which, typically, might take the form of a micro-processor. The micro-processor 33 sends part of this information that it is monitoring to control register 34 where it is at least temporarily held.

As stated earlier, the buffer works in circular fashion and when one-half of the buffer is full its content can then be transmitted out while at the same time new data can be and is fed in from the
processor into the remaining half of the buffer.
The data or information is fed into the buffer in
the format of the network message and the micro-
processor looks at this network message to develop
suitable control for the transmittal of the data
onto the trunk line for transmission to a receiving
adapter. Comparator 35 monitors the addressing
counter 32 so when the buffer has reached the one-
half full condition comparator 35 will produce a
signal indication that this data can then be transmitted out while the other half of the buffer may
still be receiving additional data from the CPU.
The data from the buffer 30, a signal indication
from comparator 35 and an output from control
register 34 are sent to the logic circuits of the
control logic section 17 (Fig. 2) which are identified generally as 36 in Fig. 4.

Fig. 5 shows in somewhat greater detail the
make up of the logic circuits 36. For communicating between adapters, the information is converted
from the network message form, which the processor
produces and responds to, into a frame format which
the adapters produce and respond to. The frame
format is evolved from the network message. The frame format consists of a flag section at the beginning and at the end of the frame, an access code, a "To" and a "From" code, a function code, check words and data. In the transmit mode for explanatory purposes only and for ease of understanding, it can be considered that the buffer and control logic section 17 transforms the information that is outputted from the CPU in the network message form into a frame format which is the form in which the information is transferred between adapters. Control register 34 (Fig. 4) sends the access code of the network message into the logic section 36 where it is combined at 38 with the settings of manually operable thumb wheel switches 39 and provide an input to shift register 40. The "To" and the function portions of the message proper of the network message are also transferred from control register 34 into shift register 40. A further input to shift register 40 is a signal indication of the "From" code indication which is manually set and identifies the particular adapter from which the information to be sent on the trunk has originated. A still further input to the shift register 40 is what is known as a "flag" signal. The purpose of the flag is to provide a character that is made up of a set of signals which designates the start and the end of a frame to which

0005045

the receiving adapter synchronizes. Generally speaking, a set of 8 bits at the beginning of the frame and a set of 8 bits at the end of the frame constitute the flag signals. In the shift register 40 these various component parts of the frame format are assembled into a proper relationship for transmittal to the trunk interface circuit (section 16 in Fig. 2) for transfer to the trunk line. In general, it can be considered that each time there is a transfer from a transmitting adapter to a receiving adapter there is a sequence of at least two frames. In each of the frames the access code, the "To" and the "From" codes are the same as well as the flag signals. In general, the function code will change between the first frame and the second frame. With the first frame, the function code, as provided from the control register 34 through micro-processor 33 is a coded signal which "asks" the receiving adapter if it is ready to receive further information. In other words, the receiving adapter is asked if it has buffer space available in its buffer section 17. In reply to the response from the receiving adapter, which the transmitting adapter receives, in general micro-processor 33 then changes the function code to inform the receiving adapter that the information now being transmitted is data. Naturally if the response had initially been that the receiving adapter was not ready, i.e., that it didn't have buffer space available, then the transmitting adapter would not have changed the function and it would have continued to send the same inquiring type of function code until it received a favourable response telling it to send data or some other action is taken.

Before the information in the frame format is transmitted down the trunk, it is provided with a check word by being combined in check word generator 41. The purpose is a standard procedure employed in transmission of digital pulses to minimize the possibility of errors occurring by introducing certain words into the frame format so that the receiving adapter recognizes that there were no errors in the transmission and that the information contained in the transmitted message is correct. This is done in a conventional fashion using a cyclic redundant check work (CRC) which is used to verify the correctness of the transmitted data.

It would be appropriate here to describe in somewhat greater detail the manner in which the transmitted access code is produced. Referring to Fig. 6, the access code portion of the network message is held in control register 34 (Fig. 4) and the physical access code is set by a group of switches 39 (Fig. 5). Although the access code portion of the network message is 16 bits, it can be thought of as comprising four fields of four bit characters and, similarly, the switches can be considered to be comprised of four hexadecimal thumb wheel switches. So for purposes of explanation, the control register 34 and the switches 39 are shown in Fig. 6 as each made up of four different sections or fields A0-A3 and S0-S3 respectively with the lowest order character being leftmost. The design of the system is such that if the character of the physical access code (switch settings) is equal to zero, then the transmitted access code will contain the corresponding character of the network message access code; if the physical access code is not equal to zero, then it will take precedence over the corresponding character of the network message access code. An output signal representation of each of the switch characters S0-S3 is fed from switches 30 to a respectively corresponding comparator 50 which will produce an output on the designated line if the corresponding character is equal to zero or not equal to zero. Another output signal representation from each switch character S0-S3 is fed as an input

0005045

to a corresponding gate 51. An output signal representation of each of the access code characters A0-A3 in the control register is transmitted from control register 34 to a corresponding gate 52. The gating input into each of the gates 51 is the signal indication of the corresponding switch character being not equal to zero and the gating input to each of the gates 52 is a signal representation from a corresponding comparator 50 that the associated switch character is equal to zero. In this fashion then where the switch character is equal to zero, then the corresponding character of the access code in the control register 34 is gated through to the access code register 53 and where a switch character is other than equal to zero, the corresponding character of the access code in the control register is blocked out and the corresponding character of the switch 39 is gated into the access code register 53.

When a transmitted frame is received similar circuitry, not shown, compares the received access code with the setting of the switch settings 39. Where a switch is set at 0, any character in the corresponding field of the received access code is accepted. Where a switch is set at $\neq 0$, the

cofresponding field of the received access code is
compared to the switch setting.  Unless each of the
four bit fields of the received access code either
compare with the switch setting or the switch
setting is at zero, then the adapter trunk interface circuitry will ignore the frame and will not
pass the information contained in the frame to its
attached equipment.  This special treatment of zero
setting of the access code switches as a "don't-
care" condition provides that an adapter may be
enabled to transmit a set of access codes and to
receive a set of access codes.  The interaction of
the sets of access codes provided for in various
adapters in a network provide for a heirarchy of
accessibility in the network.

To review briefly, to this point it has been
shown how the adapter, in a transmitting mode, has
been able to obtain information from the sending
device (CPU) at the CPU rate and in the CPU format
(the network message) and transforms it into the
format (frame format) and rate which is suitable
for communication between adapters.  This has been
accomplished in the adapter by the use of the interface circuitry, buffer, the micro-processor, and the
logic circuitry.  What remains to be described is

0005045

how the transmitting adapter gets access to the trunk line to transmit information to a receiving adapter. As described earlier, each of the trunk lines can be and is shared by several simultaneous network data movements. In general, information is transmitted between adapters over the trunk lines in data blocks which are called frames. Because a number of adapters are coupled to each of the trunk lines, when an adapter is ready to transmit a frame of data it must contend with the other adapters ior use of the trunk line. In the instant system the procedure is that when an adapter wants to gain access to a data trunk line, it simply tries to transmit over that trunk line. Each trunk interface circuit (16a-d Fig. 2) contains a contention counter. This counter controls the fixed delay, the unique time slot delay, and the total delay in each adapter. Each of these delays will be described in greater detail below. The circuitry for the counter can be any well-known circuit easily designed by one of ordinary skill in the art so there is no need to describe the circuit details. When there is information on the trunk, that is, when the trunk is busy, the counter is clear and when the trunk is not busy the counter is enabled.

The delay times for each adapter are set at the time of installation of the system. These delays vary depending on the total length of the priority and position of the adapter on the trunk. The delay calculations can best be described by example. In the following example the timing is based on a two nanosecond per foot of trunk propagation time, that is, two nanoseconds for a pulse signal to travel one foot down the line. The example also assumes that it takes zero time for a turnaround of a response. First, when the trunk is busy other trunk interface circuits are disabled from initiating transmission. Second, in order for a response transmission or a next transmission by the present user of the trunk to take priority on the trunk, other trunk interface circuits are also disabled for a period, referred to as fixed delay, beyond the time that the trunk goes quiet. The fixed delay is four nanoseconds times the total trunk length in feet. In other words, it is two propagation times for the total trunk length. For example, a data trunk with a total of 1,000 feet requires a four microsecond delay. Fig. 7 diagrammatically illustrates why the fixed delay is twice the propagation time of the total trunk length. In the Fig. 7 example, adapter A ends a transmission to adapter C which is 1,000 feet (304.8 metres) down

0005045

the trunk line and must wait for adapter C to respond. In the meantime, adapter B, which is closer to adapter A, would observe that the trunk is quiet and could be available for transmission. Therefore, to enable the transmission and return between adapters A and C, adapter B must be inhinited from the end of the original transmission until the response can appear on the trunk.

Each of the adapters in the network has an assigned unique time slot delay which depends on the priority given to the adapter and its location on the trunk. The adapter which is assigned the highest priority has 0 unique time slot delay so its delay is equal only to the fixed delay. The unique time slot delay for each of the other adapters is calculated by:

Delay N = Delay N-1 + (4 ns. x Distance) Where: Delay N-1 is the delay of the adapter with the next lower priority; Distance is length of trunk, in feet, between adapter N and adapter N-1. Where the distance is measured in metres the above formula applies but with the time period 4 ns replaced by the time period 13.1 ns.

Fig. 8 diagrammatically illustrates an example of the assigned unique time slot delays. The example in Fig. 8 is a four adapter network showing the assigned priorities and the distance between the adapters. The calculation of the unique time slot delay for each of the adapters A-D is as follows:

Adapter A = fixed delay $(4\text{ ns} \times 1000)$ = 4 microseconds

Adapter B = $A_A$ delay + $(4\text{ ns} \times 200)$ = 4.8 microseconds

Adapter C = $A_B$ delay + $(4\text{ ns} \times 800)$ = 8 microseconds

Adapter D = $A_C$ delay + $(4\text{ ns} \times 500)$ = 10 microseconds

The total delay is the delay time required until all adapters are enabled to transmit. The total delay time is equal to the unique time slot of the adapter with the lowest priority plus four nanoseconds times the greatest distance between the adapter with the lowest priority and any other adapter. Using the example of Fig. 8, the total delay is:

Adapter D time slot delay + $(4\text{ ns} \times 500)$ = 12 microseconds

After the total delay, all of the adapters are enabled to transmit. Any adapter, wanting to transmit, has immediate access to the trunk. It is at this time that there is a potential of collision between

0005045

messages on the trunk.  In order for two messages to collide, the adapters would have had to begin transmitting within a small period of time.  This period of time is the propagation time between the two transmitting adapters.  In the example of Fig. 8 adapters A and C have a two microsecond time period during which collision could occur.  This is because there is a two microsecond propagation time over the 1,000 foot (304.8 metres) distance separating adapters A and C.  If adapter C starts to transmit, it will take two microseconds for adapter A to see that the trunk is busy.  At that instant adapter A would then be inhibited from transmitting.  Because of the proximity between adapters A and B, there is only a 400 nanosecond time period during which there could be message collision between those two adapters.

0005045

CLAIMS:

1. In an electrical data-pulse communication system having multiple pulse transmission trunk lines (14) and multiple equipments (10, 11) each separately coupled to said trunk lines (14), an adapter (12) for each of said multiple equipments (10, 11) for controlling the transfer of data pulses between said multiple equipments (10, 11) over said multiple trunk lines (14), each adapter comprising: a buffer (17a) coupled to an associated equipment for at least temporarily holding data messages received from or to be sent to the associated equipment (10, 11); control means (17c) coupled to said buffer (17a) for operatively controlling the receiving or sending of data messages; means responsive to said control means (17c) for coding the data messages for transmission from the adapter; and circuit means (16) for placing coded data messages on a selected trunk line (14) and for selectively receiving coded data messages.

2. An adapter as claimed in claim 1 wherein said circuit means (16), includes means for testing if another data message is on the selected trunk line, and means responsive to said testing means for placing a data message on the selected trunk line when the line is clear.

3.    An adapter as claimed in claim 1 or 2 wherein: said buffer (17a) includes means for selectively storing data messages and reading out data messages concurrently in selected sections of the buffer.

4.    An adapter as claimed in claim 2 or 3 in which said circuit means (16) for placing coded messages on a selected trunk line includes means for identifying the destination and the origin of the data message.

5.    An adapter as claimed in claim 2 wherein said circuit means includes counter means responsive to signals appearing on the trunk line and means for providing delay in placing a coded message on the selected trunk line when it appears to be clear.

6.    An electrical data-pulse communication system comprising multiple pulse transmission trunk lines (14), multiple equipments (10, 11) each separately coupled to said trunk lines (14), and a respective adapter as claimed in any preceding claim for each of said multiple equipments for controlling the transfer of data pulses between said multiple equipments over said multiple trunk lines.

*FIG. 1*

CPU'S → | 10 |   | 10 |   | 10 |

ADAPTERS → | 12 |   | 12 |   | 12 |

14

14

ADAPTERS → | 13 |   | 13 |

CONTROL UNITS → | 15 |   | 15 |

○ ○ 11        ○ ○ 11

MAGNETIC TAPE        MAGNETIC DISC

*FIG.2*

16        17        18        19

| To | 16a

TO TRUNK LINES

| T₁ | 16b

| T₂ | 16c

| T₃ | 16d

17c

18a

CPU

17a

18b

19a

17b

TRUNK INTERFACE

BUFFER & CONTROL LOGIC

MICRO-PROCESSOR

CPU INTERFACE

## FIG.3

27 → FF → FF 28 → TO CPU

17

24 FF ← FF 22 ← INTERFACE ← FROM CPU

GATE ← REG. ← REG. ← 20

26 25 23 21

## FIG.4

33 MICRO-PROCESSOR

34 REG.

36 LOGIC ← BUFFER 30

← 31

35 COMPARATOR ← COUNTER 32

BUFFER 1/2 FULL

## FIG.5

FLAG SWITCHES 39

38 ACCESS CODE

CHECKWORD ← SHIFT REG. ← "TO"

41 FUNCTION

40 DATA

TRUNK LINE

"FROM"

A    B    C
TRUNK
|← 304·8m →|
SAMPLE OF FIXED TIME DELAY

## FIG.7

C    D    B    A
|← 152·4m →|← 91·4m →|← 61·0m →|
TRUNK    SAMPLE UNIQUE TIME SLOTS

## FIG.8

FIG. 6

| Category | Citation of document with indication, where appropriate, of relevant passages | Relevant to claim |
|---|---|---|
| | FR - A - 2 320 021 (FUJI ELECTRIC) <br><br> * Page 1, lines 28-32; page 2, line 13 - page 3, line 3; page 4, line 34 - page 5, line 37; figures 2,4 * <br><br> -- | 1,4,6 |
| | FR - A - 2 306 478 (XEROX CORPORA-TION) <br><br> * Page 8, line 32 - page 9, line 20; page 13, line 1 - page 15, line 7; claim 10; figures 1-3 * <br><br> -- | 1,2,6 |
| | COMMUNICATIONS OF THE ACM, vol. 19, no. 7, July 1976 New York, U.S.A. METCALFE et al.: "Ethernet: Distributed Packet Switching for Local Computer Networks", pages 395-404 <br><br> * Page 396, point 2; page 397, point 3.3; page 398, point 3.5.1; page 399, point 4.3 * <br><br> -- | 1,2,4,6 |
| | GB - A - 1 486 362 (THE SINGER COMPANY) <br><br> * Page 2, line 84 - page 3, line 123; figure 2 * <br><br> -- | 1,6 |
| | FR - A - 2 294 488 (ELECTRONIQUE MARCEL DASSAULT) <br><br> * Page 6, line 9 - page 7, line 16; page 10, lines 12-23; claims 1-4; figure 5 * <br><br> -- <br><br> ./. | 1,6 |

## DOCUMENTS CONSIDERED TO BE RELEVANT

**CLASSIFICATION OF THE APPLICATION (Int. Cl.²)**

H 04 L 11/16
G 06 F 3/04

**TECHNICAL FIELDS SEARCHED (Int.Cl.²)**

H 04 L 11/16
G 06 F 3/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-06-1979 | WANZEELE |

EPO Form 1503.1 06.78

## European Patent Office

## EUROPEAN SEARCH REPORT

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | FR - A - 2 337 477 (COMPAGNIE HONEYWELL BULL)<br><br>* Claims 1,2,7; figure 1 *<br><br>-- | 1,2,5,6 | |
| | DE - B - 2 442 736 (VDO ADOLF SCHINDLING)<br><br>* Column 4, line 46 - column 5, line 24 *<br><br>-- | 1,2,5,6 | |
| | DATAMATION, vol. 22, no. 8, August 1976<br>Barrington<br>DEMARINES et al.: "The Cable Bus in Data Communications", pages 89-92<br><br>* Page 91, middle column, line 61 - right-hand column, line 12 *<br><br>---- | 1,6 | TECHNICAL FIELDS SEARCHED (Int. Cl.²) |

EPO Form 1503.2  06.78